# EUROPEAN PATENT APPLICATION

(11) **EP 3 940 565 A1**
(43) Date of publication of application: **19.01.2022**
(21) Application number: 20305803.7
(22) Date of filing: 15.07.2020
(51) Int. Cl.: G06F 21/55, G06F 21/57, G06F 21/74

(54) **SYSTEM MANAGEMENT STATES**

(71) Applicant: HEWLETT-PACKARD DEVELOPMENT COMPANY, L.P., Spring, TX 77389 (US)
(72) Inventor: Chevalier, Ronny, 92190 CEDEX Meudon (FR); Dalton, Christopher Ian, Bristol, Bristol BS1 6NP (GB); Plaquin, David, Bristol, Bristol BS1 6NP (GB)
(74) Representative: Bryers LLP

(57) **Abstract**

In an example, a method is described. The method comprises receiving an indication that a system management memory is in an unexpected state. The method further comprises obtaining, from protected storage, information regarding an expected state for the system management memory. The method further comprises causing the system management memory to be provided in the expected state during operating system runtime based on the information.

## Description

### BACKGROUND

Basic Input/Output System (BIOS) may be used to initialize computing components during a booting process. The BIOS may offer certain runtime services for an Operating System (OS). On x86 systems, some code of the BIOS may continue to execute alongside the OS using the System Management Mode (SMM). This code may execute with a high privilege level.

### BRIEF DESCRIPTION OF DRAWINGS

Non-limiting examples will now be described with reference to the accompanying drawings, in which:
Figure 1 is a flowchart of an example method of providing system management memory in an expected state;
Figure 2 is a schematic drawing of an example system during boot time;
Figure 3 is a schematic drawing of an example system during operating system run time;
Figure 4 is a schematic drawing of another example system during operating system run time;
Figure 5 is a flowchart of an example method of providing system management memory in an expected state;
Figure 6 is a simplified schematic drawing of an example machine-readable medium;
Figure 7 is a simplified schematic drawing of another example machine-readable medium; and
Figure 8 is a simplified schematic drawing of an example apparatus.

### DETAILED DESCRIPTION

Code executed using the System Management Mode (SMM) may be executed in a protected memory area called System Management Random Access Memory (SMRAM). The SMRAM comprises both the code and data (which may collectively define an execution state of the system). An attacker able to compromise this code in order to execute arbitrary code or change its expected behavior (such as omitting a verification procedure) may be able to compromise other parts of a computing system (e.g., comprising a Central Processing Unit (CPU) and BIOS for initializing an Operating System (OS) to be run by the CPU) while remaining undetected by the OS security services (e.g., antivirus operating on the OS). The SMM code may therefore be regarded as an attractive target for attackers. Protecting the integrity of the code is relevant to maintaining confidence in a computing system. A more detailed description of the SMM and the SMRAM is provided below.

Some BIOS services may be capable of detecting at OS runtime whether or not the SMM code has been compromised. Once a compromise has been detected, the execution state of the SMRAM may no longer be trusted. Responsive to a determination being made that the execution state can no longer be trusted, some BIOS services may log the potential intrusion and/or shutdown the computing system.

A vendor may implement a cryptographic signature solution at boot time to ensure the integrity of the BIOS, for example, by detecting whether or not the SMM code at boot time is genuine or as expected. Where a determination is made that the BIOS has been compromised, whether maliciously or not, it may be possible to initialize recovery of the BIOS.

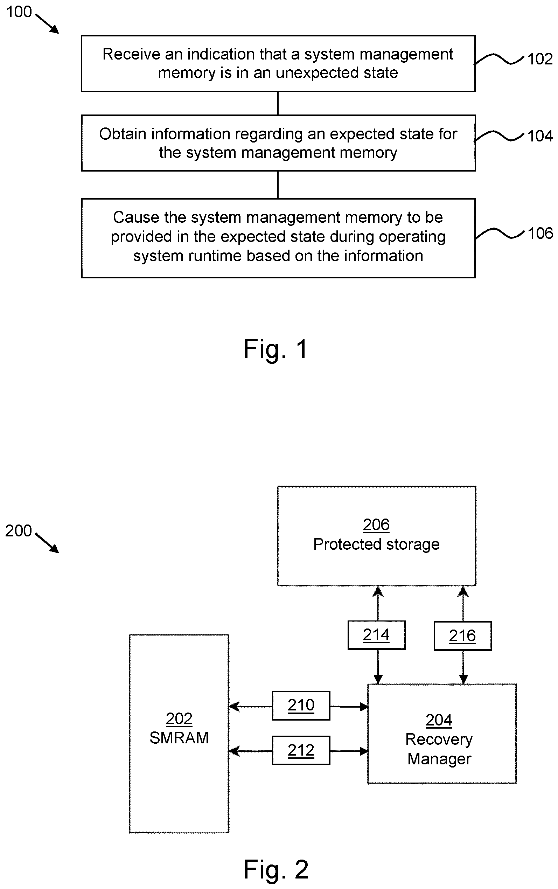

Figure 1 shows an example of a method 100 (e.g., a computer-implemented method) of providing system management memory (e.g., the SMRAM) in an expected state (e.g., an 'expected execution state'). As mentioned above, there may be scenarios where the SMRAM is in an unexpected state, for example, due to the SMM code having been compromised by an attacker. The method 100 comprises certain blocks, as described below, which may allow the SMRAM state to be provided in an expected state, for example, as part of a recovery process.

The method 100 may be implemented by a recovery manager (RM). The RM may be a dedicated, trusted or otherwise isolated component of a computing system to manage the recovery process. The RM may be hardware, firmware and/or software implemented. For example, a dedicated apparatus comprising processing circuitry such as an application specific integrated circuit (ASIC) or other module comprising processing circuitry may implement the RM functionality as described herein. In another example, a computer-readable medium (e.g., a tangible machine-readable medium) may store instructions, which when executed by at least one processor (e.g., a dedicated processor of the computing system or at least one core of the Central Processing Unit (CPU) of the computing system), cause the at least one processor to implement the functionality of the RM. Any combination of hardware, firmware and/or software may form a dedicated recovery manager component to implement certain methods described herein (e.g., the method 100).

As will be described in more detail below, the RM may extract the state (e.g., a trusted state) of system management memory (e.g., SMRAM), for example, when initializing the system for enabling recovery of the SMRAM to an earlier state. The method 100 assumes that the RM has previously extracted the state of the SMRAM and/or has access to an expected or trusted state of the SMRAM. The term 'SMRAM' is an example of system management memory. However, for ease of reference, the term SMRAM may be used to refer the system management memory in the examples described herein.

The method 100 comprises, at block 102, receiving an indication that a system management memory (e.g., SMRAM) is in an unexpected state. For example, the RM may receive the indication from an Intrusion Detection System (IDS) which monitors the state of the system management memory (e.g., during OS runtime). Some examples of IDSs may comprise BIOS services capable of detecting at OS runtime whether the SMM code (as represented by the state of the SMRAM) has been compromised. Upon detecting that the SMRAM is in the unexpected state, the IDS causes the RM to recognize that the SMRAM is in the unexpected state. In some examples, the indication provided by the IDS may comprise an explicit indication that the SMRAM is in the unexpected state. In some examples, the indication may be used by the RM to infer that the SMRAM is in the unexpected state.

Although the IDS and RM may be considered as providing separate functionality in this example, in some examples, at least some of the IDS and RM functionality may be provided by the same component of the computing system.

In some examples, during OS runtime, a BIOS service executed in a system management mode is available and write access to the system management memory (e.g., the SMRAM) is locked when receiving the indication that the system management memory is in the unexpected state.

The method 100 further comprises, at block 104, obtaining information regarding an expected state for the system management memory (e.g., the SMRAM). The information may be obtained from protected storage such as a memory isolated from the rest of the computing system. For example, the protected storage may be accessible to the RM but not another component of the computing system. The protected storage may store a snapshot of an expected state (e.g., 'information' regarding a trusted or any previous state) of the SMRAM. In some examples, the snapshot, or 'information', comprises the content of the SMM memory that has yet to be interfered with. Obtaining the information may comprise receiving, by the RM, data from the protected storage which can be used to provide the SMRAM in the expected state.

The method 100 further comprises, at block 106, causing the system management memory (e.g., the SMRAM) to be provided in the expected state during operating system runtime based on the information.

The information obtained at block 104 may comprise a partial or complete snapshot, or an indication, of the expected state. In some examples, this information may be complete information which can be used to cause the state of the system management memory to be replaced with the expected state at block 106. In some examples, this information may be used to infer what change is needed to cause the SMRAM to be provided in the expected state.

In some examples, the RM may be communicatively coupled with the SMRAM in order to use the information obtained at block 104 to cause the SMRAM to be provided in the expected state at block 106. For example, the information may comprise code and/or data which can be used to change, restore or otherwise modify the state of the SMRAM (e.g., by causing a processor of the computing system to overwrite code and/or data held in the SMRAM). Thus, the RM may facilitate recovery of the SMRAM from the unexpected state to the expected state by using information from the protected storage, which may not be accessed by the OS since the RM may have access to the protected storage whereas other parts of the computing system (e.g., the CPU whether in SMM or not) may not have access to the protected storage.

As noted in block 106, the SMRAM is provided in the expected state during OS runtime. Thus, in some examples, instead of merely logging that the SMRAM is in the unexpected state and/or causing a system reboot upon detecting that the SMRAM is in the unexpected state, the method 100 may allow recovery of the SMRAM to the expected state during OS runtime. This may allow the state of the SMRAM to be restored to a previous (e.g., safe) state (as recorded in the protected storage) if the SMRAM is determined to be in an unexpected state (such as may occur if there is an intrusion). Such an approach may provide a practical and/or robust remediation that maintains the availability of the computing system and/or reduces downtime due to rebooting.

The following description provides details of example ways to initialize (e.g., at boot time) and/or implement (e.g., at OS runtime) a system for implementing certain methods described herein (e.g., method 100).

Figure 2 shows an example system 200 to initialize certain components of the computing system to facilitate the recovery process described in relation to Figure 1. The system 200 is implemented as part of a boot process of a computing system.

The system 200 comprises SMRAM 202, a RM 204 and protected storage 206 such as described in relation to the method 100. As can be seen in Figure 2, the SMRAM 202 and protected storage 206 are isolated from each other by the RM 204, which controls the flow of data between the SMRAM 202 and protected storage 206.

The arrows in Figure 2 are accompanied by blocks indicating the process for initializing the system 200.

At block 210, the BIOS enters the SMM and initializes the SMRAM 202 (e.g., as part of the boot process).

At block 212, the RM 204 takes a snapshot of the (e.g., execution) state of the SMRAM 202 (i.e., at boot time). At boot time, the state of the SMRAM 202 may be trusted or otherwise not affected by OS processes). For example, if the SMRAM 202 is considered to be in a trusted or expected state before being rebooted, the state of the SMRAM 202 at boot time may also be trusted. The snapshot may refer to and/or comprise the 'information' described above in relation to the method 100 and may comprise data and/or code which can be used to provide the SMRAM 202 in the expected state.

At block 214, the RM 204 stores the snapshot of the SMRAM 202 state in the protected storage 206. In some examples, the protected storage 206 comprises a static secure storage (e.g., a component such as an isolated flash or another RAM).

At block 216, the RM 206 disallows write access to the secure storage 206 (e.g., to prevent the stored information from becoming corrupted). This setting where write access is disallowed may remain enforced until the next reset of the computing system. In some examples, it may not be possible to allow write access again during runtime such that a reboot of the computing system may allow the content of the secure storage to again be modified and/or overwritten.

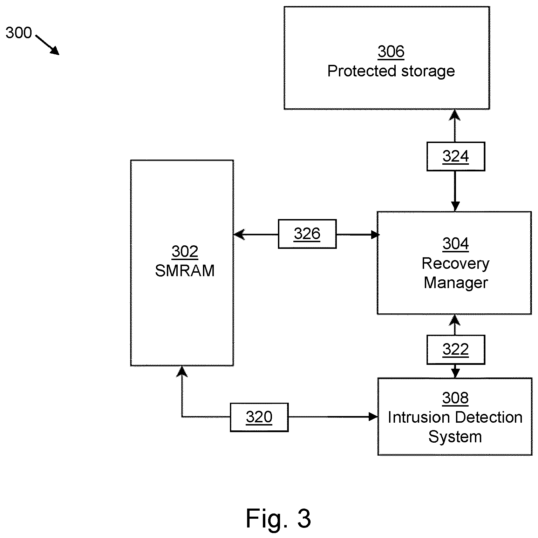

Figure 3 shows an example system 300 to implement the recovery process of certain methods described herein (e.g., method 100) using certain components of the computing system (e.g., the same or similar components as described in relation to Figure 2). Unless described otherwise, reference signs for features of system 300 which correspond or are similar to features of system 200 are incremented by 100 compared with Figure 2. The system 300 is implemented as part of an OS runtime process of a computing system.

In addition to the SMRAM 302, RM 304 and protected storage 306 as described above in relation to Figure 2, the system 300 further comprises a runtime Intrusion Detection System (IDS) 308 with the same or similar functionality to the IDS described in relation to the method 100. In some examples, the IDS 308 may comprise a dedicated processor of the computing system and/or may be implemented by privileged software run on the CPU.

The arrows in Figure 3 are accompanied by blocks indicating the process for providing the SMRAM 302 in the expected state during runtime.

The system 300 is implemented at runtime (i.e., when the OS is running). Further, in this example, BIOS services executed in SMM are available, and the SMRAM is locked.

At block 320, the IDS 308 monitors the state of the SMRAM 302.

At block 322, if an intrusion is detected (e.g., the SMRAM 302 has been tampered with and/or the SMRAM 302 is in the unexpected state), the IDS 308 notifies the RM 304 (e.g., the IDS 308 provides the indication which is 'received' by the RM 204, for example, as in block 102 of the method 100).

Once the RM 304 receives the alert from the IDS 308 that an intrusion is detected (or the RM 304 has received the 'indication'), the RM 304 fetches, at block 324, the snapshot (e.g., the 'information') by accessing the protected storage 306 (e.g., to 'obtain' the information, for example, as in block 104 of the method 100).

At block 326, the RM 304 restores the state of the SMRAM 302 based on the snapshot (e.g., the RM 304 provides SMRAM 302 in the expected state based on the information, for example, as in block 106 of the method 100).

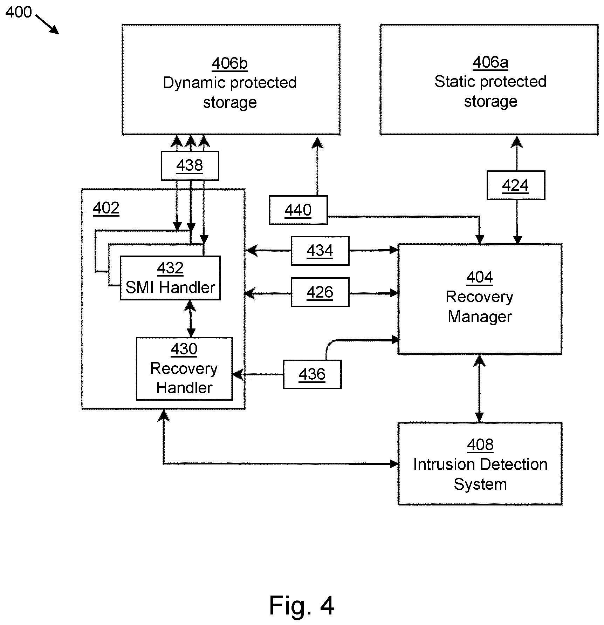

Figure 4 shows an example system 400 to implement the recovery process of certain methods described herein (e.g., method 100) using certain components of the computing system (e.g., the same or similar components as described in relation to Figure 2). Unless described otherwise, reference signs for features of system 400 which correspond or are similar to features of system 300 are incremented by 100 compared with Figure 3. The system 400 is implemented as part of an OS runtime process of a computing system. Similar to the example of Figure 3, the system 400 comprises SMRAM 402, a RM 404, protected storage 406 (in this example, a static protected storage 406a similar to the protected storage 306 of the system 300 and a dynamic protected storage 406b) and an IDS 408. Certain blocks shown in Figure 4 may or may not be implemented by the system 400. For example, in some examples one of the static protected storage 406a and the dynamic protected storage 406b may be provided.

Certain arrows in Figure 4 are accompanied by blocks indicating the process for providing the SMRAM 402 in the expected state during runtime. For brevity, certain blocks shown in Figure 3 are omitted from Figure 4 but, in some examples, these blocks of Figure 3 may or may not be implemented by the system 400 of Figure 4.

The examples described below may refer to certain example methods implemented by the system 400. There may be multiple possible implementations for the RM 404 to recover the state of the SMRAM 402 (e.g., to provide the SMRAM in the expected state'). As will be described in more detail below, in some examples, the RM 404 may enlist the help of an additional dedicated Recovery Handler (RH) 430 within the SMM code. In some examples, the full recovery may be accomplished by the RM 404 itself.

In some examples, the RM 404 may initially assess if the RH 430 has also been compromised (either based on the 'indication' provided by the IDS 408 and/or by directly measuring the RH 430). In some examples, upon a determination being made that a RH 430 associated with a system management mode (SMM) (of the SMRAM 402) is not compromised, a system management interrupt (SMI) is triggered (e.g., by a chipset of the computing system) to enable the SMRAM 402 to be provided in the expected state.

In some examples, the RH 430 uses the information (e.g., as obtained in block 424 similar to block 324 of Figure 3) to enable the SMRAM 402 to be provided in the expected state (e.g., at block 426 similar to block 326 of Figure 3).

In some examples, if the RH 430 has not been compromised, the RM 404 triggers an SMI to call an SMI Handler 432 associated with the RH 430. The RH 430 uses the snapshot (e.g., the 'information') stored in the secure storage (e.g., from the static protected storage 406a) to overwrite the content of the SMRAM 402 with this stored copy of the code and/or data to enable restoration of the state of SMRAM. If in SMM and the RH 430 has not been compromised (i.e., the SMI handler code has not been compromised), it may be possible to trust that an attacker cannot tamper with the restoration process since, in SMM, all cores of the CPU are stopped except the core(s) operating according to the SMM. As highlighted previously, in some examples, the SMIs are non-reentrant.

In some examples, upon a determination being made that a RH 430 associated with a system management mode is compromised and, in response to receiving a further indication that the SMRAM 402 has not been provided in the expected state during operating system runtime based on the information, the system 400 may cause a system reboot to enable the SMRAM 402 to be provided in the expected state. Such an approach may raise the bar for an attacker since they may need to be aware of the RH 430, and also be able to modify the code of the RH 430 to disable it without being detected.

In some examples, upon a determination being made that a RH 430 associated with a system management mode is compromised or is not implemented, and where the SMRAM 402 is accessible to the RH 430, the system 400 may cause a modification to the SMRAM 402 to enable write access so that the SMRAM 402 can be provided in the expected state. For example, the RM 404 may write to the SMRAM 402 or otherwise modify the SMRAM 402 to put at least part of the SMRAM 402 in the expected or correct state. Thus, in this example, the RM 404 facilitates the recovery process directly without needing to trust an (e.g., additional) SMI handler 432.

There may be scenarios where the RM 404 is unable to control the execution state of the CPU of the computing system. In order to avoid race conditions with an attacker and/or to avoid inconsistencies in the computing system, recovery to the expected state may be implemented by the RM 404 and an additional SMI handler 432.

In some examples, where an execution state of a processing apparatus (e.g., the CPU) implementing the operating system cannot be controlled, the system 400 may prevent (e.g., at block 434) an SMI occurring (e.g., to prevent the CPU entering SMM) prior to causing the SMRAM 402 to be provided in the expected state during OS runtime based on the information. For example, the RM 404 may be capable of preventing an SMI occurring where a source (such as a part of the chipset) for causing the SMI is other than the RH 430 and the RM 404 has access to the source to prevent the SMI from occurring or being caused to occur.

In some examples, where an execution state of a processing apparatus (e.g., the CPU) implementing the operating system cannot be controlled and where a determination is made that a RH 430 associated with a SMM is compromised, the system 400 may restore (e.g., at block 436) a capability of the RH 430 based on the information (e.g., from block 424) and trigger an SMI to enable the restored RH 430 to provide the SMRAM 402 in the expected state. Restoring the capability of the RH 430 may be regarded as a partial recovery instead of, for example, a full recovery by causing replacement (e.g., overwriting) of the entire code and/or data implemented by the SM RAM 402. Thus, in some examples, the RM 404 triggers (e.g., also at block 436) an SMI to call the RH 430 that finishes the full recovery of the state of the SMRAM 402.

This approach leading to block 436 may be used because, in some examples, while the RM 404 copies content of the snapshot (i.e., the 'information') to the current SMRAM 404 state, it may not be possible to prevent the CPU switching to SMM, which can thus create inconsistencies and potentially crash the computing system. Further, if the SMM is compromised, an attacker may be able to (again) modify the content of the SMRAM 402 while the RM 404 is modifying it. The approach leading to block 436 may minimize race condition issues since, in some examples, a small portion of the SMRAM 402 may be modified and the RH 430 may not be expected to be called, at least initially. Further, such an approach may rely on a signal to detect whether the CPU is in SMM (i.e., via a System Management Interrupt Active (SMIACT#) signal) to drive the partial recovery.

In some examples, the recovery process may be further controlled by using the 'indication' provided from the IDS 408. If the IDS 408 is able to pinpoint a compromised area or compromised areas in SMRAM 402, it may be possible to rely on the indication provided by the IDS 408 to determine to overwrite the compromised area(s).

In some examples, where the indication that the SMRAM 402 is in the unexpected state is indicative of a compromised portion (or 'area') of the SMRAM 402, the system 400 (e.g., the RM 404) may use the information to correct the compromised portion to provide the SMRAM 402 in the expected state.

In some examples, the system 400 (e.g., the RM 404) may cause a system management interrupt, SMI, state of an SMI handler 432 associated with a SMM to be stored, at block 438, in an additional protected storage (e.g., the dynamic protected storage 406b). Upon receiving the indication that the SMRAM 402 is in the unexpected state, the RM 404 may further determine, at block 440, whether or not the SMI state stored in the additional protected storage 406b can be trusted based on a log time of the SMI state in the additional protected storage 406b and a receipt time of the indication.

Thus, in some examples, it may be possible to rely on the cooperation from all the SMI handlers 432 to send their current state to the additional protected storage 406b (so that both static state and dynamic state information regarding a previous and/or current state of the SMRAM 402 is accessible to the RM 404). In such an implementation, as soon as the RM 404 receives an alert from the IDS 408, the RM 404 may no longer trust any data stored in the log (in the additional protected storage 406b) after the timestamp of the alert. In some examples, this implementation can be achieved by causing the RM 404 to lock access to the additional protected storage 406b.

In some examples, the RM 404 may determine whether or not the SMI handler 432 needs to be restored based on whether or not the SMI state can be trusted. Where the SMI handler 432 needs to be restored, the RM 404 may locate data corresponding to a trusted SMI state for the SMI handler from the additional protected storage 406b (e.g., at block 440) and use the data to restore the SMI handler (e.g., via block 436).

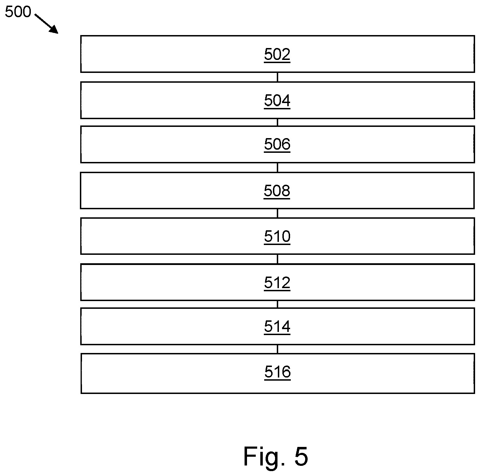

Figure 5 shows an example of a method 500 (e.g., a computer-implemented method) of providing system management memory (e.g., the SMRAM) in an expected state (e.g., an 'expected execution state'). Figure 5 is a flowchart comprising blocks corresponding to certain methods implemented by certain blocks described above in relation to Figures 3 or 4. Where appropriate, certain blocks of the method 500 may be omitted. The sequence of blocks in Figure 5 is not indicative of the blocks being performed in a certain order (e.g., since some blocks may be omitted in certain methods). For example, depending on whether or not certain components are compromised, different blocks of the method 500 may be implemented as discussed above in relation to Figure 4. In some examples, the method 500 may comprise or implement the method 100 of Figure 1.

Block 502 of the method 500 triggers, upon a determination being made that a recovery handler associated with a system management mode is not compromised, a system management interrupt to enable the system management memory to be provided in the expected state.

In block 504 of the method 500, upon a determination being made that a recovery handler associated with a system management mode is compromised and, in response to receiving a further indication that the system management memory has not been provided in the expected state during operating system runtime based on the information, the method 500 causes a system reboot to enable the system management memory to be provided in the expected state.

In block 506 of the method 500, upon a determination being made that a recovery handler associated with a system management mode is compromised or is not implemented, and where the system management memory is accessible to the recovery handler, the method causes a modification to the system management memory to enable write access so that the system management memory can be provided in the expected state. In some examples, once write access has been enabled, the recovery manager may write to the system management memory so that the system management memory can be provided in the expected state.

In block 508 of the method 500, where an execution state of a processing apparatus implementing the operating system cannot be controlled, a system management interrupt associated with a source other than a recovery handler of the system management memory is prevented from occurring prior to causing the system management memory to be provided in the expected state during operating system runtime based on the information. For example, the source may be a chipset capable of causing a system management interrupt and this chipset may be accessible to a recovery manager for implementing the method 500 so that the recovery manager may cause the source to cause the system management interrupt.

In block 510 of the method 500, where an execution state of a processing apparatus implementing the operating system cannot be controlled and where a determination is made that a recovery handler associated with a system management mode is compromised, a capability of the recovery handler is restored based on the information and triggering a system management interrupt to enable the restored recovery handler to provide the system management memory in the expected state.

In block 512 of the method 500, where the indication that the system management memory is in the unexpected state is indicative of a compromised portion of the system management memory, the information is used to correct the compromised portion to provide the system management memory in the expected state.

In block 514 of the method 500, a system management interrupt, SMI, state of an SMI handler associated with a system management mode is caused to be stored in an additional protected storage. Block 514 further comprises, upon receiving the indication that the system management memory is in the unexpected state, determining whether or not the SMI state stored in the additional protected storage can be trusted based on a log time of the SMI state in the additional protected storage and a receipt time of the indication.

In block 516 of the method 500, a determination is made whether or not the SMI handler needs to be restored based on whether or not the SMI state can be trusted and, where the SMI handler needs to be restored. Block 516 of the method 500 further comprises locating data corresponding to a trusted SMI state for the SMI handler from the additional protected storage and using the data to restore the SMI handler.

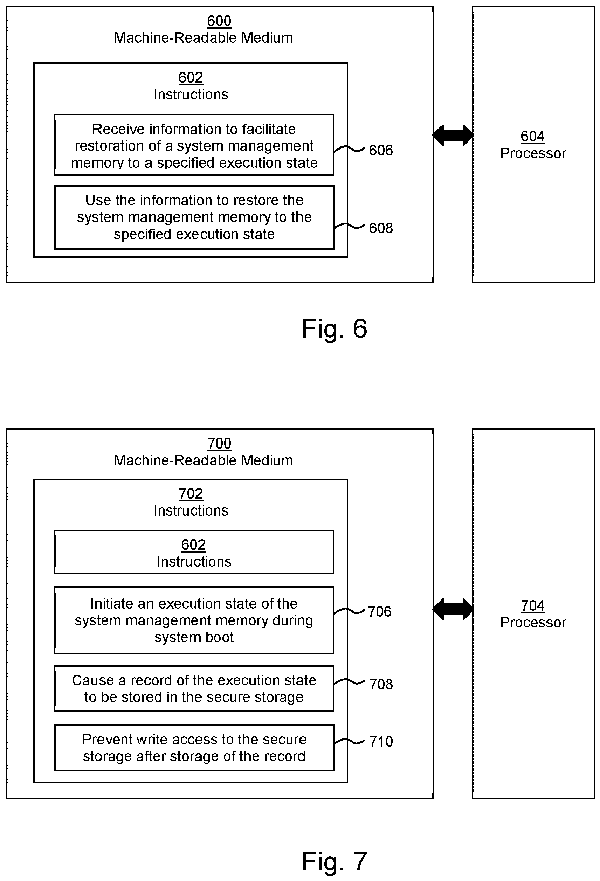

Figure 6 shows an example of a tangible machine-readable medium 600 storing instructions 602 which, when executed by at least one processor 604, cause the at least one processor 604 to implement certain methods described herein. The instructions described below are to implement certain systems described above (e.g., the systems 300, 400 of Figure 3 and 4).

In this example, the instructions 602 comprise instructions 606 to cause the at least one processor 604 to receive, from the secure storage, information to facilitate restoration of the system management memory to a specified execution state (e.g., the 'expected state' as described in relation to the method 100). Implementing the instructions 606 may correspond to block 324 of Figure 3.

The instructions 602 further comprise instructions 608 to cause the at least one processor 604 to use the information to restore the system management memory to the specified execution state during operating system runtime (e.g., corresponding to block 326 of Figure 3) upon a determination being made that the system management memory is not in an expected execution state (e.g., by the IDS 308 of Figure 3).

Figure 7 shows an example of a tangible machine-readable medium 700 storing instructions 702 which, when executed by at least one processor 704, cause the at least one processor 704 to implement certain methods described herein. The tangible machine-readable medium 700 may be accessible to a recovery manager such as described in Figures 2 to 4 and may, in some examples, implement the system 200 described in relation to Figure 2 (i.e., during a boot process). For example, the recovery manager may implement processing circuitry (e.g., via a dedicated processing apparatus and/or the CPU of the computing system) which can access the tangible machine-readable medium 700. The instructions 702 comprise the instructions 602 of Figure 6 (e.g., to implement the system 300 or 400 (i.e., during runtime)).

The instructions 702 comprise instructions 706 to cause the at least one processor 704 to initiate an execution state of a system management memory (e.g., SMRAM) during a system boot (which may correspond to block 210 of Figure 2).

The instructions 702 further comprise instructions 708 to cause a record (or 'snapshot' as obtained at block 212 of Figure 2) of the execution state to be stored in a secure storage (e.g., 'protected storage') (which may correspond to block 214 of Figure 2).

The instructions 702 further comprise instructions 710 to prevent write access to the secure storage after storage of the record (which may correspond to block 216 of Figure 2).

In some examples, the system boot is implemented by a basic input/output system, BIOS, service. During system boot, the BIOS service initiates the execution state of the system management memory and, upon booting, allows write access to the secure storage to enable the record to be stored in the secure storage.

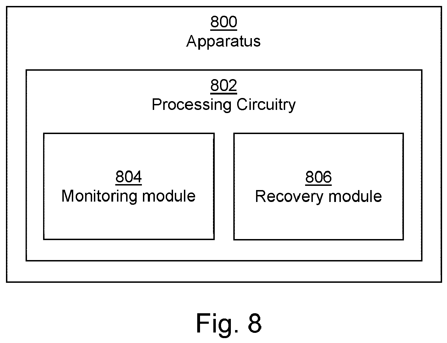

Figure 8 shows an example of an apparatus 800 for implementing certain methods described herein such as the method 100. The apparatus 800 comprises processing circuitry 802. The processing circuitry 802 comprises a monitoring module 804 and a recovery module 806. In some examples, the monitoring module 804 is to implement certain functionality of the IDS 308, 408 described above. In some examples, the recovery module 806 is to implement certain functionality of the recovery manager 204, 304, 404 described above. Although the monitoring module 804 and recovery manager 806 are depicted as part of the same apparatus 800, in some examples, these modules may be implemented by separate apparatus (e.g., using separate processing circuitry).

In use of the apparatus 800, the monitoring module 804 is to monitor a memory (e.g., the 'SMRAM') for facilitating operation of a system management mode.

The recovery module 806 is to access a secure storage to obtain information regarding an expected execution state of the system management mode. Further, the recovery module 806 is to modify the memory during operating system runtime to enable the system management mode to be in the expected execution state responsive to a determination being made that the system management mode is not in the expected execution state.

In some examples, any of the modules described above (e.g., the monitoring module 804 and/or the recovery module 806) may comprise at least one dedicated processor (e.g., an application specific integrated circuit (ASIC) and/or field programmable gate array (FPGA), etc.) for implementing the functionality of the module(s). In some examples, a dedicated region or processor of a chipset or CPU of the computing system may implement the functionality of the module(s).

A description of certain terms described herein is now given.

SMM is a highly privileged operating mode of x86 processors. It is not intended for general-purpose software and may instead be used for the firmware of the computing system. The SMM may provide the ability to implement certain OS-independent and/or platform-specific functions. Examples of such functions include: shutting down the system if it is in danger of overheating, protecting access to the BIOS flash, facilitating BIOS update, and getting or setting up Unified Extensible Firmware Interface (UEFI) secure boot variables.

The SMM provides a separate execution environment that is invisible to the OS. This may be regarded as similar to a Trusted Execution Environment (TEE) for executing code in an isolated execution environment of a processor. The code executed in SMM may modify the firmware stored into flash to prevent unexpected modifications by the OS, to provide a layer of security for a computing system. For example, malware executing with kernel privileges may be prevented from overwriting the firmware and becoming persistent.

The code and data used in SMM may be stored in a hardware-protected memory region referred to as 'SMRAM', which is accessible in SMM. Access to the SMRAM may depend on the configuration of the memory controller. Such access to the SMRAM may be available to the BIOS during the boot process. Once the relevant code and data has been loaded in SMRAM by the BIOS, the firmware may lock the memory region by setting the D_OPEN bit to 0 ('zero') and the D_LCK bit to 1 ('one'). Access to these bits is controlled by the SMRAM Control (SMRAMC) register. When protected, or locked, the SMRAM is accessed by code running in SMM, thus preventing an OS from accessing it and/or preventing any Direct Memory Access (DMA) from other components of the computing system. The memory controller can determine if a memory access is performed in SMM due to the existence, or not, of a System Management Interrupt Active (SMIACT#) signal asserted by the processor of the computing system.

SMM is entered by generating a System Management Interrupt (SMI), which is a type of hardware interrupt. Software can also make the hardware trigger an SMI. The BIOS sets up the SMRAM with code that processes the SMI. This code may be referred to as an SMI handler. An SMI may cause each Central Processing Unit (CPU) core of the computing system to enter the SMM. The SMI is non-maskable and non-reentrant (i.e., when an SMI handler is processing an SMI it cannot handle other SMIs). In terms of security, SMI handlers may be regarded as a main attack surface since they can process data controlled by an attacker.

Features described in relation to methods, machine-readable media and apparatus described herein may modify, be combined with or otherwise implemented as part of any other methods, machine-readable media and apparatus described herein. For example, the methods 100, 500, the systems 200 to 400 and/or the machine-readable media 600, 700 may be at least partially implemented by an apparatus such as the apparatus 800 (e.g., a dedicated processing circuitry for implementing the method, system and/or processor associated with the machine-readable medium), and vice versa.

Examples in the present disclosure can be provided as methods, systems or machine readable instructions, such as any combination of software, hardware, firmware or the like. Such machine readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices (for example, any one or any combination of the monitoring module 804 and/or the recovery module 806) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method, comprising:
receiving an indication that a system management memory is in an unexpected state;
obtaining, from protected storage, information regarding an expected state for the system management memory; and
causing the system management memory to be provided in the expected state during operating system runtime based on the information.

2. The method of claim 1, upon a determination being made that a recovery handler associated with a system management mode is not compromised, the method comprises triggering a system management interrupt to enable the system management memory to be provided in the expected state.

3. The method of claim 2, where the recovery handler is to use the information to enable the system management memory to be provided in the expected state.

4. The method of claim 1, upon a determination being made that a recovery handler associated with a system management mode is compromised and, in response to receiving a further indication that the system management memory has not been provided in the expected state during operating system runtime based on the information, the method comprises causing a system reboot to enable the system management memory to be provided in the expected state.

5. The method of claim 1, upon a determination being made that a recovery handler associated with a system management mode is compromised or is not implemented, and where the system management memory is accessible to the recovery handler, the method comprises causing a modification to the system management memory to enable write access so that the system management memory can be provided in the expected state.

6. The method of claim 1, where an execution state of a processing apparatus implementing the operating system cannot be controlled, the method comprises preventing a system management interrupt associated with a source other than a recovery handler of the system management memory from occurring prior to causing the system management memory to be provided in the expected state during operating system runtime based on the information.

7. The method of claim 1, where an execution state of a processing apparatus implementing the operating system cannot be controlled and where a determination is made that a recovery handler associated with a system management mode is compromised, the method comprises restoring a capability of the recovery handler based on the information and triggering a system management interrupt to enable the restored recovery handler to provide the system management memory in the expected state.

8. The method of claim 1, where the indication that the system management memory is in the unexpected state is indicative of a compromised portion of the system management memory, the method comprising using the information to correct the compromised portion to provide the system management memory in the expected state.

9. The method of claim 8, comprising causing a system management interrupt, SMI, state of an SMI handler associated with a system management mode to be stored in an additional protected storage, the method further comprising, upon receiving the indication that the system management memory is in the unexpected state, determining whether or not the SMI state stored in the additional protected storage can be trusted based on a log time of the SMI state in the additional protected storage and a receipt time of the indication.

10. The method of claim 9, comprising determining whether or not the SMI handler needs to be restored based on whether or not the SMI state can be trusted and, where the SMI handler needs to be restored, the method further comprising locating data corresponding to a trusted SMI state for the SMI handler from the additional protected storage and using the data to restore the SMI handler.

11. The method of claim 1, where, during operating system runtime, a basic input/output system, BIOS, service executed in a system management mode is available and write access to the system management memory is locked when receiving the indication that the system management memory is in the unexpected state.

12. A tangible machine-readable medium storing instructions which, when executed by at least one processor, cause the at least one processor to:
receive, from a secure storage, information to facilitate restoration of a system management memory to a specified execution state; and
use the information to restore the system management memory to the specified execution state during operating system runtime upon a determination being made that the system management memory is not in an expected execution state.

13. The tangible machine-readable medium of claim 12, where the instructions are to cause the at least one processor to:
initiate an execution state of the system management memory during a system boot;
cause a record of the execution state to be stored in the secure storage; and
prevent write access to the secure storage after storage of the record.

14. The tangible machine-readable medium of claim 13, where the system boot is implemented by a basic input/output system, BIOS, service, and where the BIOS service is to initiate the execution state of the system management memory and, upon booting, allow write access to the secure storage to enable the record to be stored in the secure storage.

15. Apparatus comprising processing circuitry, the processing circuitry comprising:
a monitoring module to monitor a memory for facilitating operation of a system management mode; and
a recovery module to:
access a secure storage to obtain information regarding an expected execution state of the system management mode; and
modify the memory during operating system runtime to enable the system management mode to be in the expected execution state responsive to a determination being made that the system management mode is not in the expected execution state.
